# EUROPEAN PATENT APPLICATION

(11) **EP 1 743 872 A1**
(43) Date of publication of application: **17.01.2007**
(21) Application number: 05257758.2
(22) Date of filing: 16.12.2005
(51) Int. Cl.: C02F 1/48

(54) **Apparatus, system and method for removing a contaminant in a fluid through the application of an electrostatic field**

(30) Priority: 15.07.2005 US 182019
(71) Applicant: Hydralogic Systems Inc., Barrie, ON L4N 9A2 (CA)
(72) Inventor: Beckley, Michael, Barrie Ontario L4N 8A3 (CA); Ormsby, William, Orillia Ontario L3V 4G2 (CA)
(74) Representative: MacLean, Martin Robert

(57) **Abstract**

A device (10) and method for the treatment of fluids using electrostatic fields generated by a high voltage electric current, which reduces or eliminates calcification, scaling and microbiological contamination. A high voltage negative DC current is applied to a core electrode (24), generating an electrostatic field which traverses a dielectric sleeve (30) surrounding the core electrode (24) and charges the exterior surface of the dielectric sleeve (30). Organic and inorganic particles as well as biological contaminants which pass through the electrostatic field or contact the surface of the dielectric sleeve (30) are then charged. Fluid flowing through the device (10) is agitated by a combination of spiral vane sections (36) surrounding the dielectric sleeve (30) and helical baffle sections lining the housing wall. Charged inorganic particles coalesce into spherical aggregates which resist adhesion to pipes and vessels and can be filtered by techniques such as RO without deteriorating the filter membrane. The device (10) can thus be used to pre-treat water so as to enhance the performance and durability of purification systems such as RO filtration systems.

## Description

### FIELD OF INVENTION

The present invention relates to fluid treatment systems. In particular, this invention relates to a device and method for removing a contaminant in a fluid through the application of an electrostatic field to the fluid.

### BACKGROUND OF THE INVENTION

Systems designed to remove contaminants from a fluid, also known as fluid treatment or purification systems, are used in many different types of applications, including residential, commercial, agricultural and industrial uses. For example, water purification techniques are widely used in both open and closed-loop water systems to reduce levels of contaminants and to maintain water conditions suitable for use. Generally, a closed-loop system is where no contamination point exists and filtration is conducted at the point of consumption. A closed-loop system relies on the design, quality of installation, components and regular servicing to maintain the benefits. In contrast, an open-loop system has the potential to be contaminated many times. Bottled water is an example of an open-loop system. The inherent supply chain means the water is handled many times as are the containers. Open and closed loop systems are used to create potable water from various water sources which may contain different kinds of organic and inorganic contaminants that may be unsuitable for human or animal consumption, or even dangerous.

Water systems used in residential, commercial, agricultural and industrial applications can be prone to calcification, scale formation and contamination by many types of biological contaminants. The nature and extent of these problems varies depending upon the water chemistry and the type of water system. In many cases, a large portion of the cost of maintaining a water system is devoted to the elimination of minerals and contamination caused by microbiological pollutants such as bacteria, endotoxins, moulds, parasites, fungus and viruses.

The purification of large volumes of water by conventional techniques has conventionally been costly and problematic, particularly in industrial and agriculture uses. Chemical treatments tend to have undesirable side effects, and can actually be harmful if precise conditions are not maintained. Mechanical filtration is one of the most common methods of water treatment or purification, but it is substantially limited both in terms of the rate at which water can be treated or purified and the useful life of the filter used in the system.

Reverse osmosis (RO) filtration is one of the most effective filtration techniques. In a typical RO filtration system, water is forced through a semi-permeable membrane to extract pollutants and contaminants. RO systems provide an extremely effective level of filtration initially, but this tends to degrade quickly as the membrane deteriorates and becomes clogged with contaminant particles.

In water treatment or purification systems, the filter membrane is subject not only to clogging by particles, but also tends to become positively charged as electrons are shed into the passing water, and the charged membrane actually attracts and holds neutral particles such as calcium carbonate, exacerbating clogging of the membrane. Moreover, RO filter membranes require continual replacement as a result of constant wear and tear from undesirable elements, for example some types of inorganic contaminants, such as calcium carbonate, which coalesce in water systems to form sharp, needle-like structures that pierce and erode the filter membrane. This significantly limits the life of the membrane and results in a slowly deteriorating output water quality and filtration rate.

RO filter membranes are so sensitive that in many environments, once the efficiency of the filter membrane drops by as little as 2% the membrane must be replaced. Thus, RO filter membranes must be replaced on a regular basis, which can be very costly. As such, RO filter membranes may not be suitable for some uses such as agricultural uses.

It is known to treat and/or pre-treat fluids such as water with electrostatic fields generated by an electrostatic device, to eliminate biological pollutants and reduce calcification and scaling in water circulation systems. Conventional invasive electrostatic devices employ the use of a dielectric material surrounding a high voltage electrode. In these cases, materials used as a dielectric can vary from plastic to ceramic. The selection of dielectric material will also be based on the suitabity of the material to be used in the methods of manufacture.

The construction of these electrostatic devices can, for example, introduce one or more gaps between the dielectric material and the electrode surface. The presence of gaps may eventually lead to high voltage at the electrode penetrating or breaching the dielectric material surrounding the electrode, which can result in high voltage current terminating at the reactor case or fixed plumbing, which would render the device inoperable or cause harm to the operator/user. Others have attempted to solve this gap problem by applying a ceramic coating to the electrode. While potentially effective at alleviating this problem, such electrode-dielectric couplings are susceptible to fracture during transport, installation and use possibly due to fluctuations in core water temperature. A fracture of as little as 1/1000 of an inch can result in a breach of the dielectric.

Despite the previous use of electrostatic devices, there has previously been no system capable of efficiently and effectively treating fluids such as water in large volumes, or for treating fluids such as water for prolonged intervals without the need for continuous maintenance and replacement of filter membranes. Previous electrostatic devices, such as, for example, that disclosed in U.S. patent No. 6,332,960, the contents of which are hereby incorporated by reference, are too complicated in manufacture, installation and/or operation and may not perform at a sufficient level to be economical in large scale water purification, such as industrial or agriculture uses.

Previously known electrostatic devices can be affected negatively by periods of static flow where biofilms (e.g. aggregation of microorganisms growing on a solid substrate) and precipitated particulate material can accumulate on those surfaces of such electrostatic devices exposed to water. Accumulated film or particulate material on these surfaces can result in a decrease of the electrostatic field strength, thus decreasing the efficiency of the device.

Previously known electrostatic devices may also require the insertion of components of the electrostatic device or the entire device into existing plumbing. This may require proportionally larger diameter plumbing, which may not be available. Further, such prior art devices rely on existing plumbing of metal fabrication, which can lead to variability in performance due to hydraulic instability, field intensity, and overall efficacy of applying a constant electrostatic field to particulate and scale forming ions. In other cases, previous devices may utilize build-to-suit reactor chambers based upon the expected fluid flow characteristics in which the reactor is to operate. These devices may not be economically feasible to use in each desired location. Prior art devices that employ build-to-suit applications may not provide uniformity of operating parameters as each device and installation may vary due to a need to obtain local electrical regulatory approval by the applicable authorities. Often the mere design of these devices warrant they not be certified by the applicable regulatory electrical authorities, such as, for example, CSA (Canadian Standards Association), UL (Underwriter Laboratories Inc.) or TUV (TUV Rheinland of North America, Inc.) as such devices can expose the installer or user to potential electrical hazards.

In certain situations, electrostatic devices are used and installed in environments that can be harmful to exposed metals or other materials making up construction. As an example, it has been known that agricultural livestock growing operations can create ambient environments with high humidity and contain concentrations of nuisance gases, from manure, that can accelerate oxidation of certain metals.

It would accordingly be advantageous to provide an improved device and system capable of reducing or eliminating mineralization and biological contamination in fluid circulation and distribution systems. It would further be advantageous to provide an improved system which effectively pre-treats a fluid prior to filtration, to reduce the harmful effects of contaminants on the filter membrane and thus prolong the useful life of the membrane.

### SUMMARY OF THE INVENTION

An aspect of the present invention provides a device for removing a contaminant from a fluid, comprising a housing having a fluid inlet and a fluid outlet spaced from the fluid inlet, an electrode disposed within the housing for connection to a high voltage electrical power supply for applying an electric current to the electrode core; a dielectric sleeve disposed about the electrode core, the dielectric sleeve having an exterior surface; and at least one spiral vane section for disrupting linear flow of the fluid through the housing, wherein the electric current is applied to the core electrode to generate an electrostatic field which traverses the dielectric sleeve and imparts a charge to the contaminant entrained in the fluid.

An aspect of the present invention provides a system for removing a contaminant from a fluid, comprising in combination: a reaction chamber housing comprising a reaction chamber having a fluid inlet and a fluid outlet spaced from the fluid inlet, an electrode disposed within the reaction chamber for connection to a high voltage electrical power supply for applying an electric current to the electrode core; a dielectric sleeve disposed about the electrode core, the dielectric sleeve having an exterior surface; and at least one spiral vane section for disrupting linear flow of the fluid through the reaction chamber, and a power module housing connected to the reaction chamber housing comprising the high voltage electrical power supply.

These and other features of the invention will be apparent from the detailed description which follows.

### BRIEF DESCRIPTION OF THE DRAWINGS

Various objects, features and attendant advantages of the present invention will become more fully appreciated and better understood when considered in conjunction with the accompanying drawings, in which like reference characters designate the same or similar parts throughout the several views.

FIG. 1 is a perspective view of an embodiment of the present invention.

FIG. 2 is an exploded view of an embodiment of the present invention.

### DETAILED DESCRIPTION OF THE INVENTION

The device of the present invention applies the known art of electrostatic fluid treatment with improvements to the design and operation of such devices to condition, treat or purify fluid so as to reduce, eliminate or prevent the formation of scale, calcification and microbial contamination of the structures containing and transmitting the fluid. The device and processes of the present invention provide a means of conditioning a fluid by directing the fluid, such as water, through an inlet of a reaction chamber and exposing the fluid to an electrostatic field which traverses at least a portion of the length of the reaction chamber. The electrostatic field is created by an electrode surrounded by dielectric material so as to create an electrode dielectric assembly. An electrostatic field traverses the electrode dielectric assembly and a charge is imparted onto particulate material (inorganic or biological contaminants) entrained in the fluid to increase the surface charge of the particulate matter resulting in an increased Zeta potential of the fluid. Zeta potential provides a measure of repulsive forces between colloids. It has been noted that an increased Zeta potential inhibits the formation of the suspended colloidal particles, preventing agglomeration and sedimentation. In reference to inorganic particulates such as calcium and certain metals, a surface charge is imposed on the particles so they repel instead of attract each other. In reference to inorganic particulates such as calcium and certain metals, existing electric charge on the surface of the colloidal particles is increased so that the repulsive forces between them are increased, resulting in a decrease in the tendency to form scale.

The present invention provides a device that increases the negative Zeta potential of the treated fluid.

The present invention provides an improved device, system and method for the treatment of fluids using electrostatic fields generated by a high voltage electric current. The improved device of the present invention can be built into new water systems or retrofitted to existing water systems, to reduce or eliminate calcification, scaling and microbiological contamination, such as biofilms, and to pre-treat water so as to enhance the performance and durability of purification systems such as RO filtration systems. The device and method of the present invention are particularly suitable for the purification of water in both open- and closed-loop circulation and distribution systems, and for the pre-treatment of water in water filtration systems, such as RO systems, to increase the efficiency and consistency of the filtration process and reduce maintenance and filter replacement costs.

Prior art devices may require high amounts of power to operate in order to achieve a desired level of decontamination. For example, previous devices can require a minimum of 10,000 watts (20 kV at 0.5 Amps) to achieve decontamination. The present invention, however, requires significant less power to operate. In a preferred embodiment, the device of the present invention may use between approximately 5 watts (25 kV at 0.2 mAmps) and approximately 31.5 watts (35 kV at 0.9 mAmps).

The invention accomplishes the above by applying a high voltage negative DC current with low amperage to the electrode dielectric assembly or electrostatic probe disposed within a reaction chamber housing. The reaction chamber housing has a fluid inlet for allowing fluid to enter the reaction chamber and a fluid outlet for allowing treated fluid to leave the reaction chamber housing. The electrode dielectric assembly comprises a core electrode surrounded by a sleeve made of dielectric material so as to generate an electrostatic field which traverses the dielectric sleeve and charges the exterior surface thereof. A power module assembly contained within a power module housing produces a high voltage (25 to 35 kV), low amperage (between 0.2 mAmps and 0.9 mAmps) negative DC current at the core electrode so as to charge the exterior surface of the dielectric sleeve which remains on the dielectric sleeve until transferred to a contaminant particle entrained in the fluid, charging inorganic particles as it passes through the electrostatic field or contacts the surface of the dielectric sleeve.

Fluid flowing through the device is agitated by a spiral vane assembly surrounding the electrode dielectric assembly. The agitated fluid flow acts both to maximize exposure of contaminant particle entrained in the fluid to the charged surface of the dielectric sleeve as well as to clean the interior surfaces of the reaction chamber.

The reaction chamber housing and the electrode dielectric assembly, as well as other components of the device noted below are comprised of materials that minimize the impact of environmental conditions on the operation of the device, such as, for example, exposure to environmental conditions that promote or accelerate corrosion (e.g. rust). These environmental conditions are commonly found in agricultural operations, such as, for example, livestock operations. To date, there has been limited acceptance of electrostatic devices as an alternative to conventional ion exchange water conditioning in agricultural uses. This is due in part to the difficulty in adapting existing plumbing, the use of non-conductive or smaller diameter (e.g. ½ inch or less) plumbing material in new installations (i.e. commonly used plastics in new building construction such as barns, etc.) and/or the use of readily oxidizable materials in the fabrication of prior art devices or the electrical power module housing associated therewith.

In the device of the present invention, all components exposed to such environment conditions can be made from materials that will not readily reduce or oxidize (i.e. rust), preferably stainless steel. Preferred materials include corrosion resistant Grade 316 stainless steel. Grade 316 stainless steel has shown significant impact resistance and resistance to gasses including hydrogen sulfide (resulting from barn manure) that can rust certain metals in these environments. The dielectric material is chemical resistant, can withstand greater impact stress than ceramic and can accommodate fluctuations in temperature. In addition, suitable dielectric materials have a resistive capacity of up to 50 kV. The dielectric material is a non-conductive compound capable of shielding the 25 kV to 35 kV electric load produced by the device. In a preferred embodiment, the dielectric material can be a high density polymeric material or compound having a tightly knit or woven dielectric material, which provides very small, sparsely spaced pores to inhibit electric arcing through the dielectric sleeve. More preferably, the dielectric material can include polyvinylchloride (PVC), polytetrafluoroethylene (sold as TEFLON^{™}, including, for example, condensed virgin TEFLON^{™}), high density polypropylene (HDPP) or high density polyethylene (HDPE).

Once charged by the electrostatic field, the inorganic particles may coalesce into generally spherical aggregates or microspheres, rather than the sharp needle-like structures which tend to form naturally in water systems which are not subject to such treatment. As the inorganic aggregates or microspheres resist adhesion to pipes, vessels, etc., the present invention thus reduces or eliminates both calcification and scaling since the charged inorganic particles can remain in suspension. Once the fluid has been treated according to the present invention, the microspheres entrained in the fluid can be filtered by techniques such as RO without deteriorating the filter membrane. As the microspheres retain the charge imparted by the device, they are repelled by a RO filter membrane, facilitating removal of the contaminants from the filtration chamber. Alternatively, as the microspheres may have nutritional or other value, particularly in agricultural uses, it may be desirable to have the inorganic particles remain entrained in the fluid. For example, it may be desirable for livestock to drink water containing the inorganic particles.

The electrostatic device of the present invention also employs a spiral vane assembly. The spiral vane assembly comprises a generally spiralled or generally helical portion linked by at least one perpendicular rod. In a preferred embodiment, the spiral vane assembly generally extends the length of the reaction chamber housing. The components of the spiral vane assembly are generally made of material suitable for use in fluid purification systems, such as the materials mentioned above, preferably stainless steel, or other suitable non-corrosive materials such as plastic. The spiral vane assemble is preferably fixed permanently to the inside of the reactor case and sized to provide a uniform spacing or gap between the inner edge (e.g. edge away from the inside or inner edge of the reaction chamber housing) of the generally helical or spiral portions or vanes of the spiral assembly and the outer edge or surface of the dielectric material. A preferred distance of the gap is 5/16". However, it will be understood that this gap will be relative to the overall dimensions of the device. As such, the size of the gap may vary depending on the specifications of the device.

As fluid flows through the reaction housing of the device, the liner flow is disrupted or agitated by the helical portions of the spiral vane assembly surrounding an electrode dielectric assembly such that the fluid flow is no longer linear. Compared to linear flow devices, the spiral vane assembly induces velocity and turbulence of the water within the reactor chamber housing resulting in an efficient means to self clean as well as to maximize contaminant exposure to the electrostatic field generated around the circumference and length of the dielectric probe. In operation, therefore, particulate or biofilm on the hard surfaces within the device can be cleaned as such material accumulates. As a result of the disrupted or agitated flow, the individual spiral or helical vanes of the spiral vane assembly provide consistent mixing along at least a portion of the length of the reaction chamber housing, so as to maximize exposure of scale forming elements to the electrostatic field.

The reaction chamber housing preferably has a hydraulic loading capacity of 15 gal/min or less at a max pressure of 120 psi. While these parameters are consistent with the average peak flow characteristics of North American and European operations in which the device is expected to operate (e.g. agriculture uses), it will be understood that the reaction chamber housing can be scaled up or down proportionally to accommodate variable flow requirements and operating parameters.

Unlike the present invention, prior art devices may require the electrostatic element to be fitted into existing plumbing, which typically is of metal construction, such that the high voltage leads of the electrostatic element terminate at a power module away from the electrostatic element, possibly several feet away. Not only would such a configuration fail to provide a uniformity of reaction conditions, it may also create electrical hazards for the operator or installer if not done properly. Given the high voltage that may be used in these systems, these electrical hazards can be significant. In addition, prior art devices are typically not configured to use the different power supplies found throughout the world, and thus would not meet international electrical approval. In an effort to meet the requirements of various electrical certification bodies throughout the world, such as, for example, CSA (Canadian Standards Association), UL (Underwriter Laboratories Inc.) or TUV (TUV Rheinland of North America, Inc.), to reduce the risk of electrical hazards and to provide a uniformity of reaction conditions, the device of the present invention fits the electrode dielectric assembly (i.e. the electrode and dielectric sleeve) within the reaction chamber housing and attaches the reaction chamber housing to the electrical component or power module housing to form a single component device that does not require any assembly by the user or installer. With the device of the present invention, the connect between the electrode dielectric assembly within the reaction chamber housing and the electrical component or power module housing is pre-connected (e.g. does not require any connection by the user or installer), therefore reducing any assembly by the user or installer, making the device of the present invention easy to install and use. The variability of the flow within the device of the present invention is controlled since the reaction chamber housing has uniform and defined flow and operational characteristics. Further ease of use may be found in having the device of the present invention capable of accepting electrical power ranging from 90 to 240 volt, single phase. As a result, the device of the present invention can be used in various jurisdictions having various electric power supply conditions without modification. Additionally, the device of the present invention can be certified by the various electrical certification bodies throughout the world, some of which are noted above.

Previous devices, particularly that recited in U.S. patent No. 6,332,960, may be uneconomical to manufacture consistently. For example, with the manufacturer of the device disclosed in U.S. patent No. 6,332,960, turning irregularities may be encountered due to the baffle sections being more complex to fabricate with consistent spacing. In addition, there may be gaps between the dielectric sleeve and the electrode. As noted above, the construction of prior art electrostatic devices may introduce one or more gaps between the dielectric material and electrode surface. The presence of gaps may eventually lead to a breach as noted above. Such a breach can result in high voltage current terminating at the reactor cases or fixed plumbing which may cause harm to the operator/user. An aspect of the invention is a process of applying a dielectric material with consistent wall thickness to the electrode so as to reduce or eliminate the presence of gaps between the dielectric sleeve and the electrode. The present invention involves compression fitting, preferably 9 ton or greater, of the dielectric sleeve material to the electrode to ensure consistent construction and reduce or eliminate the presence of air-gaps.

The device of the present invention also has a user interface to provide the operator real-time high voltage readings, hydraulic loading characteristics and a means to record and reset hours of operating use. The display provides for (a) the integration of a digital high voltage meter and capacity to display the information through the use of integrated circuitry and software; (b) the input capacity to convert frequency pulses from a flow meter to display hydraulic loading characteristics and record - total day, month and total flow since last reset; (c) a means to record and reset hours of operating use; and (d) an alarm to indicate unusual water usage activity, which can be an important feature in livestock operations where typically water consumption is constant.

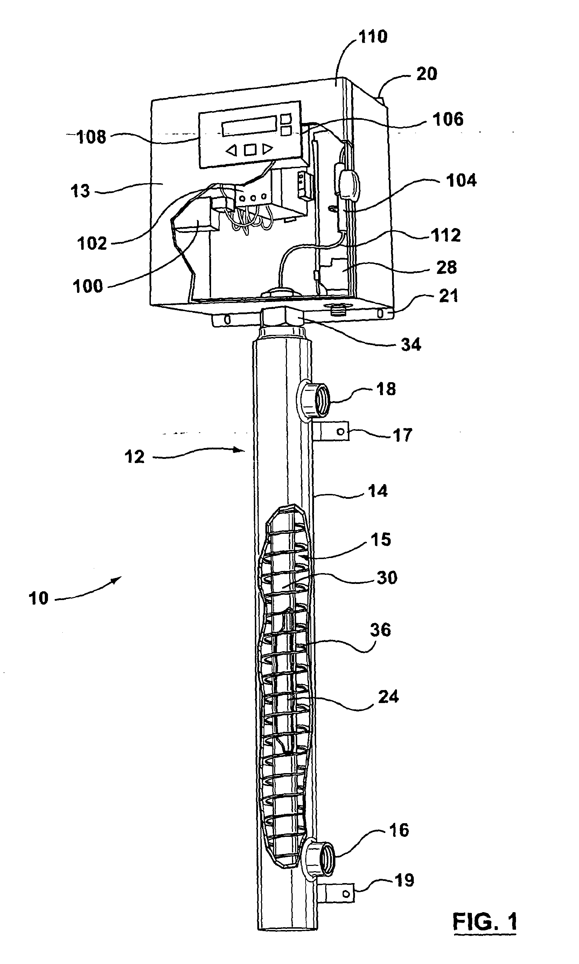

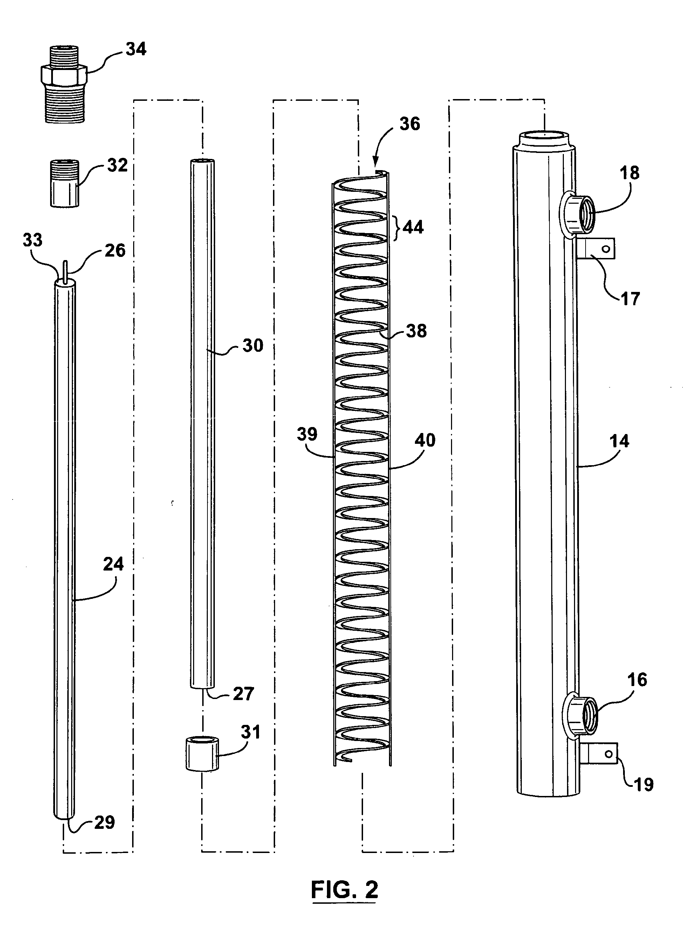

In order that the invention may be more fully understood, it will now be described, by way of example, with reference to the accompanying drawings in which Figures 1 and 2 illustrate embodiments of the present invention. A preferred embodiment of the device of the invention is illustrated in FIG. 1. The invention will be described in the context of a water purifying embodiment of the device, in which the device is most advantageously employed, however it will be appreciated that the device may be used to treat other types of liquids and the invention is not intended to be restricted to the particular applications described.

As seen in FIG. 1, a fluid (i.e. water) treating or conditioning device 10 of the present invention has a fluid (i.e. water) reaction chamber housing 12 and a power module housing 13. The device 10 may be retrofitted to an existing water system by interposing the device at a suitable location in the system, or may be integrated into a new water system (not shown). The fluid reaction chamber housing comprises a tube 14 having a fluid inlet 16 and a fluid outlet 18 spaced from the inlet 16 longitudinally along the housing 12. Tube 14 is preferably generally vertical. However, it will be understood that tube 14 could also be generally horizontal or any orientation between the general horizontal and vertical orientation. Preferably, mounting bracket or flanges 17 and 19 are provided on the exterior surface of tube 14 for securing the reaction chamber housing 12 upon installation. Mounting brackets or flanges 17 and 19 are affixed to the outer surface of tube 14 and in a preferred embodiment, may be permanently affixed to the outer surface of tube 14. In a further preferred embodiment, the inlet 16 and outlet 18 can be prepared to receive male pipe thread fittings to ease plumbing the device into new or existing water systems. The precise locations and positions of the mounting brackets or flanges 17 and 19, as well as fluid inlet 16 and outlet 18 are a matter of selection. The inlet 16 may be oriented radially offset from the outlet 18, to increase the turbulence of the fluid flowing through the housing 12.

Also seen in FIG. 1 is a power module housing 13 in which is provided the power components or power module assembly of the device 10. The power module assembly delivers the necessary power under the appropriate conditions noted below to create the electrostatic field as noted above. The power module housing 13 comprises a non-corrosive cabinet rated for outdoor use and capable of resisting impacts and various environmental conditions such as dust, rain, sleet, etc., preferably NEMA (The National Electrical Manufactures Association) 3R or 4, rated stainless steel (Grade 316). Input power is received at a power entry module 100 that permits input power using standard international electrical plugs fitted with IEC (International Engineering Consortium) connectors. A DIN (Deutsche Industrie Normen) certified rail mounted switching power supply 102 (universal AC input 85-264 Volts AC (VAC)), then converts input power from the power entry module 100 to 12 Volts DC (VDC) to accommodate the input requirements of the high voltage generator 28. The high voltage generator 28 is mounted to housing 13 and the output high voltage lead 104 fitted with a male type high voltage receptacle can also be mounted on or attached to the power module housing 13. The high voltage generator 28 produces an output of between approximately 25 and approximately 35 kV DC negative, preferably 30 kV DC negative, at between approximately 0.2 mAmps to 0.9 mAmps, preferably 0.5 mAmps.

A user interface circuit board 106 is mounted to be visible through an opening in the door panel 110 of the power module housing 13, so that an LED display 108 is visible to the user. Inside power module housing 13, the circuit board 106 is covered with a protective enclosure to protect the circuit board from dust and humidity typical of the expected operating conditions to which the device 10 will be exposed. The user interface 106 can be equipment to receive input frequency pulses from an optional use flow meter (not shown), or high voltage digital output information from the high voltage generator 28. The user interface 106 may collect and display hours of device use with reset button, is equipped with software to alarm the user of any irregularities in flow and provide an estimated cost of electrical usage. This is particularly important in livestock operations where an irregularity in flow may mean the animal's water supply could be affected (e.g. contaminated).

The conductor in the high voltage cable 104 is surrounded by an insulating material, preferably a crosslink polyethylene because of its high density and low cost. The insulator may in turn be surrounded by a braided concentric neutral, which must be spaced or insulated from the housing 13. The housing 13 in turn is grounded.

There are also provided two mounting brackets 20 and 21 on the power module housing 13. The two mounting brackets 17 and 19 affixed to the reaction chamber and two mounting brackets 20 and 21 attached to the power module housing provide a secure wall mount fastening of the device 10.

Tube 14 of reaction chamber housing 12 provides a fluid-impermeable enclosure for fluid communication between the fluid inlet 16 and the fluid outlet 18. Tube 14 may be composed of stainless steel to avoid corrosion as noted above, and can be formed thick enough to withstand the pressures of the water system in which it will be used. In a preferred embodiment, the tube 14 comprises a machined stainless steel tube with wall thickness substantial enough to withstand as up to 15 gal/min at a max pressure of 120 psi. It will be understood, however, that tube 14 can be manufactured from any suitable material such as those noted above. It will also be understood that tube 14 can be sized according to specific operating conditions.

The fluid reaction chamber housing 12 contains a core electrode 24, illustrated clearly in FIG. 2 disposed within tube 14. As shown in FIG. 2, core electrode 24 has a terminal 26 for connection to a conductor from high voltage electrical power supply 28 provided in power module housing 13.

Core electrode 24 preferably extends substantially the length of the reaction chamber housing 12, and a tip 29, which is preferably tapered to a truncated cone, facilitates a smooth breakdown of the electrostatic field about the tip 29 of the core electrode 24. Preferably, the axial length of the cone at the tip 29 should be approximately equal to one half of the circumference of the core electrode 24 to facilitate a smooth breakdown of the electrostatic field at the tip 29 of the core electrode assembly 24. The core electrode may be dimensioned as desired, and in the preferred embodiment is formed with a thickness capable of receiving and carrying an output of between approximately 25 and approximately 35 kV DC negative, preferably 30 kV DC negative, at between approximately 0.2 mAmps to 0.9 mAmps, preferably 0.5 mAmps.

The core electrode 24 is disposed within a dielectric sleeve 30, illustrated in FIG. 2, to form the electrode dielectric assembly 15. The core electrode 24 is disposed within a 2.5 mm to 3.5 mm, preferably 3 mm, machined portion of the dielectric sleeve 30, which preferably extends along substantially the entire length of the core electrode 24. The dielectric material is a non-metallic, non-conductive or electrically resistive compounds, capable of shielding the 25 kV to 35 kV electric load, is chemical resistant, can withstand greater impact stress than ceramic and can accommodate fluctuations in temperature. In addition, the dielectric material must have a resistive capacity of up to 50 kV. In a preferred embodiment, the dielectric material can be a high density polymeric material or compound having a tightly knit or woven dielectric material, which provides very small, sparsely spaced pores to inhibit electric arcing through the dielectric sleeve 30. More preferably, the dielectric material can include polyvinylchloride (PVC), polytetrafluoroethylene (sold as TEFLON^{™}, including, for example, condensed virgin TEFLON^{™}), high density polypropylene (HDPP) or high density polyethylene (HDPE). The distal end 26 of the core electrode 24 can be machined as noted above and capped with cap 31 made of the same dielectric material as sleeve 30. The proximal end 33 of the core electrode 24 is machined flat and drilled to ½ inch to receive the high voltage wire 112 that connects terminal 26 of core electrode 24 with the high voltage generator 28.

The dielectric sleeve 30 is applied-to the core electrode using a high compression fitting which preferably is a 9-ton or greater compression fitting to form the electrode dielectric assembly 15 as shown in FIG. 1 and FIG. 2. The high compression fitting provides a consistent fitting with each fabrication of the dielectric sleeve 30 to the core electrode 24 and substantially reduces the potential for gaps between the core electrode 24 and the inner diameter of the dielectric sleeve 30. Any such gaps may increase the potential for breach of the electrostatic field as noted above, such as when an arc from the core electrode breaches the dielectric sleeve.

A second dielectric cap 32, preferably made of the same material as the dielectric sleeve 30, with fine threading spanning ½ of the upper portion is applied to the proximal end 33 of the core electrode 24, and the high voltage wire 112 is welded to the terminal 26. The high voltage wire 112 is threaded through a hole in reactor housing cap 34 and the electrode 26, enclosed with the dielectric sleeve 30 and cap 32, is threaded into the bottom of the reactor housing cap 34. Silicone with high dielectric capacity is used to complete the final water tight assembly of the reactor chamber. To connect the reactor chamber housing 12 to the power module housing 13, the reactor housing cap 34 attached to the reactor chamber housing 12 is inserted through a hole in the bottom of the power module housing 13 (as seen in FIG.1) and a power module housing cap 35 is threaded onto the reactor housing cap until the reaction chamber housing 12 is firmly attached. The high voltage lead 112 from the core electrode 24 is fitted with the female type high voltage receptacle 104 and connected to the male end of the high voltage output receptacle (not shown) which is then attached to the high voltage generator 28. Since the reactor chamber is fabricated entirely of stainless steel, and is firmly connected to the housing, grounding of the completed device is capable at the power module housing 13.

In a preferred embodiment, the present invention also provides a spiral vane assembly 36 having a series of spiral vanes 38 for generating turbulence in the water passing from the fluid inlet 16 to the fluid outlet 18 and rods 39 and 40 for holding the vanes 38 in place. The components of the spiral vane assembly 36 are preferable made of stainless steel, such as Grade 316 stainless steel, to reduce corrosion. The rods 39 and 40, or alternative vanes 38 can be welded permanently to the inner diameter of the tube 14. The spiral vane assembly provides turbulent flow resulting in a self cleaning action, to remove deposits and film on hard surfaces, and exposes scale forming ions and particulate in the fluid to the highest proportion of electrostatic intensity found uniformly along the circumference and length of the dielectric sleeve 30. The spiral vane is fabricated with uniform spacing 41 between the vanes and the inner edge of the spiral vane is sized to produce a uniform distance from the dielectric sleeve along the length of the dielectric sleeve 30. The uniform spacing 41 between the helical or spiral vanes of the spiral vane assembly is approximately 1 to 3 inches, preferably 1 ½ inch, the width of the blade of the helical or spiral vane is 7/16" inch, and the exact distance from the innermost edge of the vanes 38 to the outermost surface of the dielectric sleeve 30 is 5/16". As noted above, it will be understood, however, that the above noted dimensions will be relative to the overall dimensions of the device. As such, the measurements noted above may vary depending on the specifications of the device. In a preferred embodiment, the reaction chamber housing can be approximately 31 inches in length and approximately 2 ¾ inches in diameter, while the power module housing can be approximately 10 inches in height, approximately 6 ½ inches in width and approximately 10 inches in length. The overall length (top to bottom of the assembled device) is preferably approximately 44 inches.

In operation, a high voltage, preferably 25 to 35 kV, more preferably 30 kV, and low amperage, preferably 0.2 to 0.9 mAmp negative DC current, more preferably 0.5 mAmps, is applied to the terminal 26 at the proximal end of the core electrode 24, inducing an electrostatic field surrounding the electrode dielectric assembly 15.

Particulate matter (inorganic or biological contaminants) passing through the electrostatic field or contacting the surface of the dielectric sleeve 30, pick up the charge and become ionized and polarized. In the case of inorganic contaminants such as calcium and heavy metals, the charge polarizes the particles and causes the particles to aggregate into the microspheres, as noted above, each with alike charges. The repulsive action produces a natural barrier towards scale and deposit formation. The contaminants can be effectively filtered by a downstream filtration system (for example a RO filter) without clogging or destroying the filter membrane. The negative charge picked up by the spheres is retained in aggregate form, and because the filter membrane quickly takes on the same charge as the fluid is filtered, the spheres are actually repelled from the filter membrane improving filter performance. The aggregate falls to the bottom of the filter housing and can be readily removed by a mechanical device, for example a differential switch, or by routine maintenance procedures.

As a result, the negative Zeta potential of the treated fluid exiting from outlet 18 is increased. It has been noted that an increased negative Zeta potential inhibits the formation of the suspended colloidal particles, preventing agglomeration and sedimentation.

Removal of fluid contaminants is also enhanced with increased turbulence in the fluid. The spiral vane assembly 36 further agitates the fluid and thus increases the degree of turbulence of the fluid as it progresses through the reaction chamber housing 12. This is less important in closed circulation systems, since over time the water is repeatedly pumped through the purifying system. However, in an open-loop water distribution system it is important to agitate the fluid as much as possible as it traverses the device, to maximize exposure of contaminants to the electrostatic field.

In a system where large purified fluid output is desired, for example in a potable water system from a contaminated water source, a plurality of devices of the invention can be coupled in parallel fashion between the contaminated water input and the clean water output, for example. Thus, the device of the invention can be manufactured in a single size, or a small number of standard sizes, that the purification rate can be increased as desired simply by increasing the number of devices in the line. Each device can be controlled independently to thereby control the output flow rate of purified water, up to the maximum output flow rate dictated by the incoming pipe and outgoing pipe in the water system.

The method and device of the invention can thus be used to eliminate scale in high-and low-pressure water systems. In water cooling towers the invention not only eliminates scale, it can reduce water consumption by reducing evaporation and "blow-down" (perfectly good potable water introduced into the cooling tower to dilute the concentration of total dissolved solids (TDS), which is ideally maintained at a maximum of 1,500 ppm). The method and device of the invention prevents the agglomeration of scale forming particles onto hard and heat transfer surfaces. This effect provides a means to accept higher Total Dissolved Solids (TDS) concentration, preferably as much as 3000 mg/l, before dilution is required resulting in increased operational efficiency and potable water utilization.

Various embodiments of the present invention having been thus described in detail by way of example, variations and modifications will be apparent to those skilled in the art. The invention includes all such variations and modifications as fall within the scope of the appended claims.

## Claims

1. A device for treating a contaminant from a fluid, comprising
a housing having a fluid inlet and a fluid outlet spaced from the fluid inlet,
an electrode disposed within the housing for connection to a high voltage electrical power supply for applying an electric current to the electrode core;
a dielectric sleeve disposed about the electrode core, the dielectric sleeve having an exterior surface; and
at least one spiral vane section for disrupting linear flow of the fluid through the housing,
wherein the electric current is applied to the core electrode to generate an electrostatic field which traverses the dielectric sleeve and imparts a charge to the contaminant entrained in the fluid.

2. The device of claim 1 in which the electric current is a high voltage and low amperage, DC negative current.

3. The device of claim 2 wherein the electric current is 25 to 35 kV and 0.2 to 0.9 mAmp DC negative current.

4. The device of claim 3 wherein the electric current is 30 kV and 0.5 mAmp DC negative current.

5. The device of claim 4 wherein the negative Zeta potential of the fluid is increased.

6. A system for removing a contaminant from a fluid, comprising in combination:
a reaction chamber housing comprising
a reaction chamber having a fluid inlet and a fluid outlet spaced from the fluid inlet,
an electrode disposed within the reaction chamber for connection to a high voltage electrical power supply for applying an electric current to the electrode core;
a dielectric sleeve-disposed about the electrode core, the dielectric sleeve having an exterior surface; and
at least one spiral vane section for disrupting linear flow of the fluid through the reaction chamber, and
a power module housing connected to the reaction chamber housing comprising the high voltage electrical power supply.

7. The system of claim 6 in which the electric current is a high voltage and low amperage, DC negative current.

8. The device of claim 7 wherein the electric current is 25 to 35 kV and 0.2 to 0.9 mAmp DC negative current.

9. The device of claim 8 wherein the electric current is 30 kV and 0.5 mAmp DC negative.

10. The device of claim 9 wherein the negative Zeta potential of the fluid is increased.
